Europäisches Patentamt

European Patent Office

Office européen des brevets

(11) Veröffentlichungsnummer: **0 470 334 A1**

(12) **EUROPÄISCHE PATENTANMELDUNG**

(21) Anmeldenummer: **91107237.9**

(22) Anmeldetag: **03.05.91**

(51) Int. Cl.⁵: **B01D 53/36**, B01J 23/28, B01J 37/16

(30) Priorität: **08.08.90 DE 4025174**

(43) Veröffentlichungstag der Anmeldung: **12.02.92 Patentblatt 92/07**

(84) Benannte Vertragsstaaten: **AT BE CH DE DK ES FR GB GR IT LI LU NL SE**

(71) Anmelder: **SIEMENS AKTIENGESELLSCHAFT Wittelsbacherplatz 2 W-8000 München 2(DE)**

(72) Erfinder: **Hums, Erich, Dr., Dipl.-Chem. Kopernikusstrasse 1 W-8600 Bamberg(DE)**

(54) **Arsenresistenter Mischoxidkatalysator und Verfahren zu seiner Herstellung.**

(57) Bei Katalysatoren, die Oxide zumindest der Metalle Vanadium und Molybdän enthalten, besteht das Problem, daß der diese ihre katalytische Aktivität in Rauchgasen durch zunehmende Vergiftung mit Arsenoxid verlieren. Der Erfindung liegt daher die Aufgabe zugrunde, einen Weg zu weisen, die solche Katalysatoren, insbesondere gegenüber Arsenoxid resistent gemacht werden können.

2.1 Hierzu sieht die Erfindung vor, daß der arsenresistente, Oxyde zumindest der Metalle Vanadium und Molybdän enthaltende Mischoxidkatalysator mindestens eine Mischoxidphase der Bruttoformel $V_6Mo_4O_{25}$ und gegebenenfalls der Phase $MoO_3$ enthält.

2.3 Der beanspruchte Katalysator ist insbesondere zur Entstickung von Verbrennungsabgasen, insbesondere von Rauchgasen, von großen Feuerungsanlagen, geeignet.

FIG 1

EP 0 470 334 A1

Die Erfindung bezieht sich auf einen, Oxide zumindest der Metalle Vanadium und Molybdän enthaltenden, Katalysator.

Solche Katalysatoren haben unter anderem zur Minderung der Stickoxide in Rauchgasen in Gegenwart eines Reduktionsmittels Bedeutung erlangt. Hierzu werden die stickoxidhaltigen Rauchgase mit einem Reduktionsmittel, meist mit Ammoniak oder Kohlenmonoxid, angereichert und an den katalytisch aktiven Oberflächen vorbeigeführt. Dabei werden die Stickoxide bei gleichzeitiger Oxidation des Ammoniaks in Stickstoff und Wasserdampf umgewandelt. Im allgemeinen werden hierzu Katalysatoren verwandt, die Oxide eines oder mehrerer der Metalle Titan, Vanadium, Molybdän und Wolfram enthalten.

Beim Betrieb solcher Katalysatoren in stickoxidhaltigen Rauchgasen hat es sich herausgestellt, daß diese ihre katalytische Aktivität mit der Zeit verlieren. Diese Abnahme der katalytischen Aktivität erfolgt umso schneller, je höher der Arsenanteil in den Rauchgasen ist. Beim Einsatz solcher Katalysatoren im Rauchgasstrom vor der Rauchgasreinigungsanlage, insbesondere wenn eine Ascherückführung in eine Schmelzkammer vorgesehen ist, desaktivieren diese Katalysatoren infolge der verfahrensbedingten Aufkonzentration von Katalysatorgiften, wie zum Beispiel von Arsenoxid, besonders schnell.

Um diese Abnahme der katalytischen Aktivität soweit wie möglich zu unterdrücken, sind schon verschiedene Mischungen von katalytisch aktiven Komponenten untersucht worden. Dabei konnte der Desaktivierungsverlauf nur geringfügig verbessert werden.

Der Erfindung liegt die Aufgabe zugrunde, einen Weg zu weisen, wie solche Katalysatoren insbesondere gegenüber dem Katalysatorgift Arsenoxid resistent gemacht werden können.

Diese Aufgabe wird durch die Merkmale der Ansprüche 1 und 11 gelöst. Weitere vorteilhafte Ausgestaltungen der Erfindung sind den Unteransprüchen 2 bis 10 und 12 bis 27 zu entnehmen.

Erfindungsgemäß enthält der arsenresistente, Oxide zumindest der Metalle Vanadium und Molybdän enthaltende, Mischoxidkatalysator mindestens eine Mischoxidphase der Bruttoformel $V_6Mo_4O_{25}$ und gegebenenfalls der Phase $MoO_3$. Er ist insbesondere zur Minderung der Stickoxide in Rauchgasen in Gegenwart eines Reduktionsmittels, wie zum Beispiel Ammoniak oder Kohlenmonoxid, einsetzbar. Ein solcher Mischoxidkatalysator ist um mehr als ein Vielfaches arsenresistenter als alle anderen bekannten Katalysatoren, insbesondere aber verringert er seine katalytische Aktivität auch bei der Aufnahme großer Mengen von Arsenoxid nur geringfügig.

Ein solcher arsenresistenter Mischoxidkatalysator kann erfindungsgemäß dadurch hergestellt werden, daß Vanadiumoxid und Molybdänoxid oder einer ihrer Vorläufer miteinander vermischt, auf eine Temperatur, bei der die Mischung der Oxide gemäß dem Phasendiagramm zweckmäßigerweise vollständig geschmolzen vorliegt, erhitzt und sodann abgekühlt werden, wobei sich mindestens eine Mischoxidphase der Bruttoformel $V_9Mo_6O_{40}$ bildet. Diese Mischoxidphase wird sodann zur Erstellung der sauerstoffärmeren Mischoxidphase der Bruttoformel $V_6Mo_4O_{25}$ einer reduzierenden Behandlung unterzogen.

In Ausgestaltung der Erfindung kann die sauerstoffarme Mischoxidphase auf einem Trägermaterial aufgebracht sein. Hierdurch wird es möglich, die Oberfläche der katalytisch aktiven Phase im Verhältnis zum Strömungsquerschnitt einzustellen.

Eine besonders zweckmäßige Weiterbildung der Erfindung ergibt sich, wenn die Mischoxidphase der Bruttoformel $V_6Mo_4O_{25}$ auf einem oxidischen Trägermaterial aufgebracht ist und einen Porenradius von über 200 Angströmeinheiten bei mehr als 75 % der Poren aufweist. Offenbar spielt hier neben den besonderen katalytischen Eigenschaften der Vanadium-Molybdän-Oxid-Mischphase auch der große Porenradius eine bedeutsame Rolle. Möglicherweise verhindert der große Porenradius ein Verstopfen der inneren Oberfläche durch Arsenoxid.

Als oxidisches Trägermaterial kann in besonders vorteilhafter Weiterbildung der Erfindung Titanoxid, Koderit, Aluminiumoxid oder Siliziumoxid verwendet werden. Diese Stoffe sind hinreichend temperaturfest und ergeben bei den geschilderten Verfahrensschritten jene erwünschte porige Struktur.

Als ganz besonders vorteilhaft hat es sich erwiesen, wenn die Molybdänphase ebenfalls teilweise reduziert ist. Hierdurch kann verhindert werden, daß das Molybdänoxid eine Verbindung mit dem Arsenoxid des Rauchgases eingeht und sich z.B. die Verbindungen $As_4Mo_3O_{15}$ oder $MoAs_2O_7$ bilden. Zugleich kann so auch die unerwünschte Umwandlung von $SO_2$ in $SO_3$ verringert werden.

Bei der Herstellung eines solchen Mischoxidkatalysators ist es besonders vorteilhaft, wenn die sauerstoffärmere Mischoxidphase der Bruttoformel $V_6Mo_4O_{25}$ als Pulver mit dem oxidischen Träger vermischt und vorzugsweise bei 500 °C bis 600 °C kalziniert wird. Hierdurch läßt sich eine Porenradienverteilung einstellen, bei der über 75 % aller Porenradien über 200 Angströmeinheiten liegen.

Als besonders zweckmäßig hat es sich erwiesen, wenn in vorteilhafter Ausgestaltung der Erfindung die Ausgangsstoffe Vanadiumoxid und Molybdänoxid im Verhältnis 0,7 : 1 miteinander vermischt werden. Durch dieses Mischungsverhältnis liegen die beiden Ausgangsstoffe in einem Mengenverhältnis vor, das für eine Anreicherung der als Vorstufe gewünschten, sauerstoffreichen $V_9Mo_6O_{40}$-Mischoxidphase besonders gut sorgt.

In weiterer vorteilhafter Ausgestaltung der Erfindung kann der Schmelzvorgang bei Temperaturen im Bereich von 600 °C bis über 800 °C erfolgen, und kann diese Temperatur über ca. eine halbe Stunde hinweg eingehalten werden. Hierdurch wird sichergestellt, daß auch das gesamte Stoffgemisch miteinander verschmolzen und gut vermischt ist, so daß sich dann beim Abkühlen die gewünschte $V_9Mo_6O_{40}$-Phase mit möglichst wenig $MoO_3$ und $V_2O_5$-Domänen bildet.

Für die reduzierende Behandlung ergeben sich mehrere mögliche Verfahrenswege: So kann in vorteilhafter Weiterbildung der Erfindung die $V_9Mo_6O_{40}$-Phase abgekühlt, nach dem Abkühlen auf einen Korndurchmesser kleiner 180 $\mu m$ heruntergemahlen und dann einer reduzierenden Behandlung unterworfen werden.

In diesem ebengenannten Fall kann die auf einen Korndurchmesser kleiner 180 $\mu m$ heruntergemahlene $V_9Mo_6O_{40}$-Phase in Ausgestaltung der Erfindung im Festbett bei 400 °C bis 590 °C einer Gasreduktion unterzogen werden. Alternativ kann in einer anderen Ausgestaltung der Erfindung die auf einen Korndurchmesser kleiner 180 $\mu m$ heruntergemahlene $V_9Mo_6O_{40}$-Phase auch im Wirbelbett bei 400 °C bis 590 °C einer Gasreduktion mit einem reduzierenden Gas unterzogen werden.

In den beiden letztgenannten Fällen eignet sich Arsenoxid als Reduktionsmittel zur Reduktion der $V_9Mo_6O_{40}$-Phase.

In den beiden letztgenannten Fällen eignen sich auch in ganz besonders vorteilhafter Weise eines oder mehrere der Reaktionsgase Methan, Kohlenmonoxid, Wasserstoff, Kohlenwasserstoffe oder Aromate zur Reduktion der $V_9Mo_6O_{40}$-Phase. Durch diese Reduktionsmittel wird anders als bei Arsenoxid auch die $MoO_3$-Phase mit reduziert. Dies hat unter anderem eine spätere verminderte $SO_2$-$SO_3$-Konversionsrate zur Folge.

In völlig überraschender Weise braucht aber für die reduzierende Behandlung der $V_9Mo_6O_{40}$-Phase nicht deren Erstarrung abgewartet zu werden. Vielmehr kann in besonders zweckmäßiger Weiterbildung der Erfindung die reduzierende Behandlung der $V_9Mo_6O_{40}$-Phase bei einer Temperatur erfolgen, bei der die Mischung gemäß dem Phasendiagramm vollständig geschmolzen vorliegt.

In weiterer Ausgestaltung der Erfindung kann die reduzierende Behandlung durch Gasreduktion der geschmolzenen $V_9Mo_6O_{40}$-Phase in Gegenwart eines Reaktionspartners, wie zum Beispiel Arsenoxid, Methan, Kohlenmonoxid, Wasserstoff und/oder anderen Kohlenwasserstoffen bei Temperaturen erfolgen, bei denen die Mischung gemäß dem Phasendiagramm vollständig geschmolzen vorliegt.

Schließlich ist es auch in einer weiteren zweckmäßigen Ausbildung der Erfindung möglich, die reduzierende Behandlung durch Elektroreduktion der $V_9Mo_6O_{40}$-Phase bei Temperaturen, bei denen die Mischung gemäß dem Phasendiagramm vollständig geschmolzen vorliegt, durchzuführen.

In den vorgenannten beiden Fällen kann in zweckmäßiger Weiterbildung der Erfindung die durch die reduzierende Behandlung der schmelzflüssigen $V_9Mo_6O_{40}$-Phase erhaltene $V_9Mo_4O_{25}$-Phase nach der Abkühlung und vor dem Zumischen des oxidischen Trägers auf 180 $\mu m$ heruntergemahlen werden. Hierdurch erhält man einen für die Kalzinierung mit dem gewählten Trägermaterial hinreichend feines Gemisch.

Weitere Einzelheiten der Erfindung werden anhand von fünf in den Figuren dargestellten Ausführungsbeispielen erläutert. Es zeigen:

FIG 1     eine schematische Darstellung der verschiedenen Herstellverfahren für den arsenresistenten Mischoxidkatalysator,

FIG 2     ein Phasendiagramm für das System $V_2O_5$-$MoO_3$ und

FIG 3     einen Vergleich der Porengröße des erfindungsgemäßen Katalysators und eines vorbekannten Titan-Molybdän-Katalysators, bei dem das gleiche Titandioxid-Ausgangsmaterial verwendet wurde.

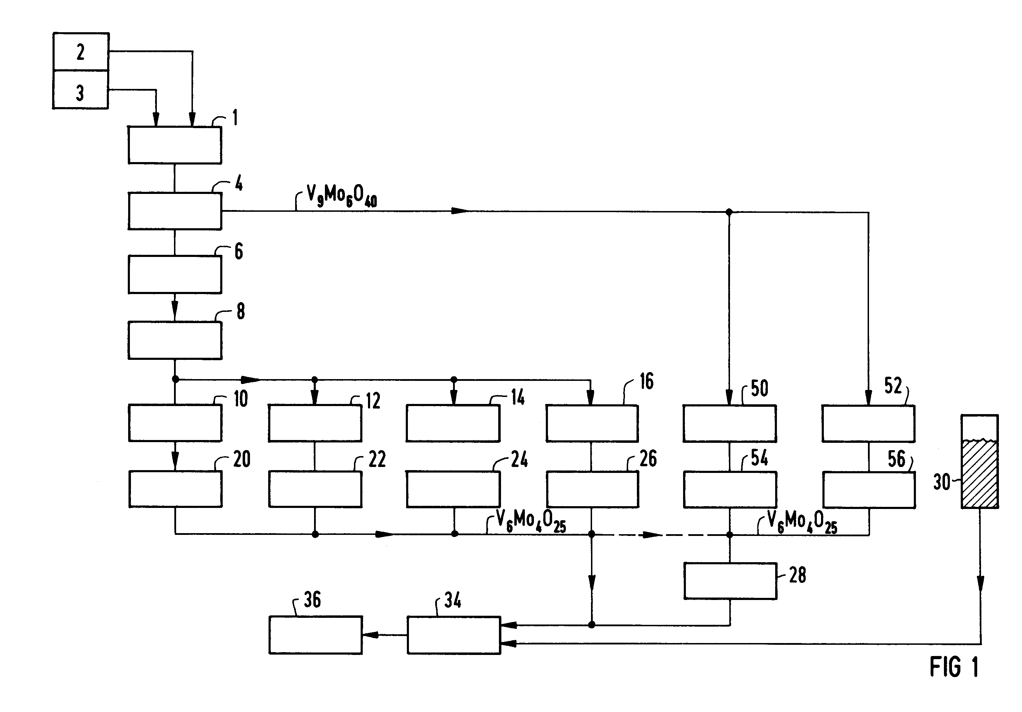

Die Figur 1 zeigt in schematischer Darstellung eine Übersicht über die verschiedenen Herstellverfahren, die zu dem erfindungsgemäßen arsenresistenten Mischoxidkatalysator führen. Diese einzelnen Herstellverfahren lassen sich in die nachfolgend beschriebenen einzelnen, nacheinander zu durchlaufenden Verfahrensschritte unterteilen:

1. Mischen (1) der Ausgangssubstanzen Vanadiumoxid (2) und Molybdänoxid (3);

2. Überführen der Mischung in die flüssige Phase durch Schmelzen (4);

3. Abkühlen (6) und Erstarren der Schmelze bzw. der $V_9Mo_6O_{40}$-Mischoxidphase;

4. Vermahlen (8) der abgekühlten Mischoxidphase;

5. Reduktion (10, 12, 14, 16) der gemahlenen Mischoxidphase. Hierfür bieten sich alternativ vier unterschiedliche Reduktionsverfahren an. Diese sind die Gasreduktion im Festbett (10), die Gasreduktion im Wirbelbett (12), das Tempern (14) des Mahlgutes bei vermindertem Druck und die Elektroreduktion (16) des Mahlgutes.

6. Abkühlphase (20, 22, 24, 26) des Mahlgutes im Anschluß an die jeweiligen Reduktionsverfahren;

7. bedarfsweises Vermahlen (28) der abgekühlten reduzierten Mischoxidphase;

8. Vermischen (34) der reduzierten Mischoxidphase mit dem Trägermaterial (30) und

9. Kalzinieren (36) der Mischung.

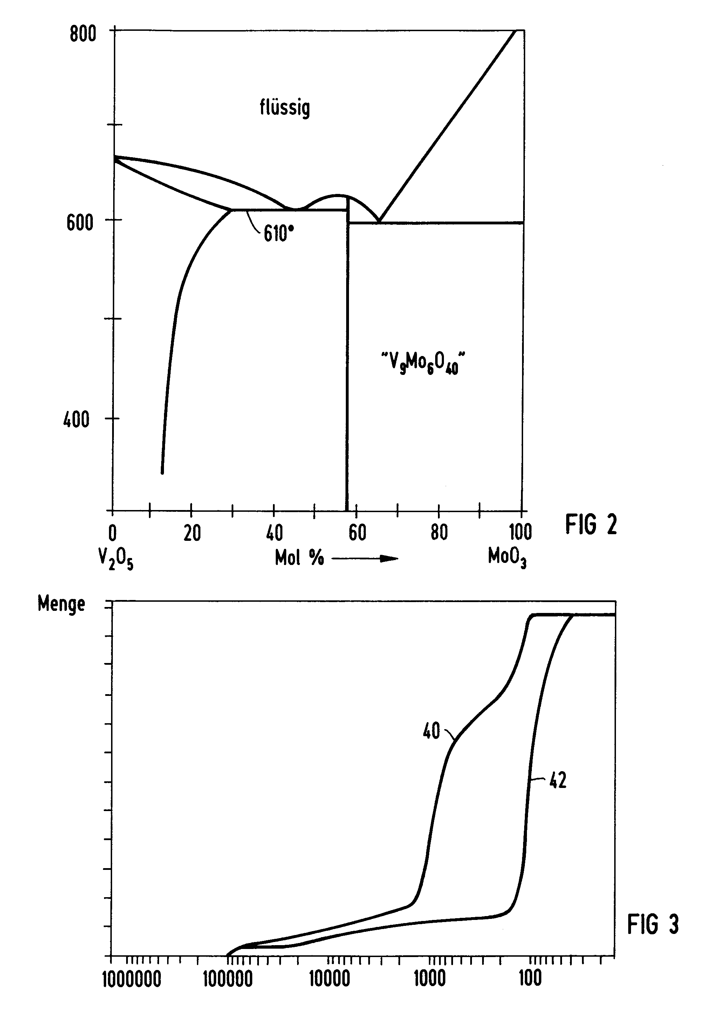

Im einzelnen werden Vanadiumoxid und Molybdänoxid bei 1 im Verhältnis 0,7 : 1 miteinander gemischt. Dieses Mischungsverhältnis entspricht nicht exakt dem stöchiometrischen Verhältnis der angestrebten Mischoxidphase, führt aber beim nachfolgenden Schmelzen 4 wegen der Besonderheit des in der Figur 2 gezeigten Phasendiagramms des $V_2O_5$-$MoO_3$-Systems zu den besten Ergebnissen.

Wie das Phasendiagramm in der Figur 2 zeigt, entsteht die sauerstoffreiche Mischoxidphase $V_9Mo_6O_{40}$ erst bei Molverhältnissen von mehr als 58 Mol-% $MoO_3$ in der $V_2O_5$-$MoO_3$-Mischung, wobei in diesem Bereich mit steigendem $V_2O_5$-Anteil immer größere Anteile einer $V_9Mo_6O_{40}$-Mischoxidphase zu erwarten sind.

Es hat sich gezeigt, daß im Bereich zwischen 58 Mol-% $MoO_3$ bis etwa 70 Mol-% $MoO_3$ die günstigsten Arbeitsbedingungen liegen. Das betrifft sowohl das vollständige Aufschmelzen der Mischung bei möglichst niederen Temperaturen als auch die größtmögliche Konzentration der zu bildenden $V_9Mo_6O_{40}$-Mischoxidphase. Wird mit einer Ausgangsmischung von $V_2O_5$ zu $MoO_3$ = 0,7 : 1 in Mol-% gearbeitet, so bildet sich nach dem völligen Aufschmelzen der Mischung im Bereich von 600 bis 650 $°C$ und dem Abkühlen bei Unterschreiten von etwa 600 $°C$ die gewünschte $V_9Mo_6O_{40}$-Mischoxidphase und nur sehr geringe Anteile einer $MoO_3$-Phase. Beim anschließenden Vermahlen dieser festen Mischoxidphase entsteht ein Pulver, das entweder im Festbett oder Wirbelbett einer Gasreduktion unterworfen werden kann. Dabei kann es bei Temperaturen von 400 bis 590 $°C$, vorzugsweise um 430 $°C$, mit einem reduzierenden Gas kontaktiert werden. Dieses kann am besten als Kreislaufgas durch das Festbett oder den Wirbelschichtreaktor strömen. Als reduzierende Gase sind Methan, Kohlenmonoxid, Wasserstoff und Kohlenwasserstoffderivate oder Aromate geeignet. Auch Arsenoxid in Form von $As_2O_3$ läßt sich zur Überführung der $V_9Mo_6O_{40}$-Phase in die sauerstoffärme $V_6Mo_4O_{25}$-Phase heranziehen. In diesem letztgenannten Fall kann jedoch unter Umständen später eine Auslaugung oder Ausheizung der $V_6Mo_4O_{25}$-Phase zur Verminderung von Arsenrückständen erforderlich werden. Bei dieser Kontaktierung mit obigen Stoffen reduziert sich die $V_9Mo_6O_{40}$- Phase zu einer $V_6Mo_4O_{25}$-Phase. Mit steigender Temperatur wird die Geschwindigkeit der Reduktion beschleunigt.

Anders als mit dem Reduktionsmittel Arsenoxid läßt sich aber mit den Reduktionsmitteln Methan, Wasserstoff, Kohlenmonoxid und Kohlenwasserstoffderivaten zugleich auch die restliche $MoO_3$-Phase mit reduzieren. Dadurch wird verhindert, daß im späteren Betriebseinsatz das Molybdänoxid mit dem Arsenoxid des Rauchgases Verbindungen der Art wie z.B. $As_4Mo_3O_{15}$ oder $MoAs_2O_7$ eingehen kann. Zugleich wird so auch eine geringere Aufoxidationsrate von $SO_2$ in $SO_3$ erreicht. Diese ist höchst unerwünscht, weil das $SO_3$ mit dem Ammoniak im Rauchgas Ammoniumsulfat $(NH_4)SO_4$ und Ammoniumhydrogensulfat $NH_4HSO_4$ bildet und diese Stoffe bei Unterschreitung der Kondensationstemperatur jedoch oberhalb ihrer Schmelztemperatur alle nachfolgenden Einbauten im Rauchgaszug mit einer klebrigen Masse überziehen.

Die Reduktion der $V_9Mo_6O_{40}$-Phase läßt sich aber auch erreichen, wenn man diese Mischoxidphase bei Temperaturen zwischen 400 und knapp unter 600 $°C$ mehrere Stunden lang einem Hochvakuum aussetzt. Auch hier bewirkt eine höhere Temperatur eine Beschleunigung der Reaktion, wobei ein hinreichender Abstand zum Schmelzpunkt eingehalten werden muß, um eine Zerstörung der Mischoxidphase zu vermeiden. Eine weitere Möglichkeit der Reduktion der gemahlenen $V_9Mo_6O_{40}$-Phase besteht durch Elektroreduktion.

In allen diesen Fällen wird eine Mischoxidphase erhalten, die, je nach Umsetzungsfortschritt, zu einem mehr oder weniger großen Anteil der $V_6Mo_4O_{25}$-Phase führt. Diese reduzierte Mischoxidphase kann jetzt auf Korngrößen kleiner als 180 $\mu m$ heruntergemahlen werden, sofern diese feine Korngröße nicht schon aus dem Mahlschritt 8 vor der reduzierenden Behandlung vorliegt. Die hinreichend fein gemahlene $V_6Mo_4O_{25}$-Phase kann nun mit dem gewählten oxidischen Trägermaterial, wie zum Beispiel Titanoxid, Koderit, Aluminiumoxid, vermischt werden. Bei der Verwendung von Titanoxid empfiehlt sich ein Titanoxid mit einer BET-Oberfläche von 40 bis 200 $m^2/g$ und einem Porenradius von 100 bis 130 Angströmeinheiten zu verwenden. Beim anschliessenden Kalzinieren bei 500 bis 600 $°C$ bildet sich, wie das Ausführungsbeispiel zeigt, verfahrensbedingt ein katalytisch aktives Material mit einem Porenradius um 1000 Angströmeinheiten aus. Dabei weisen mehr als 75 % der Poren einen Porenradius von über 200 Angströmeinheiten und mehr als 70 % der Poren einen Porenradius von über 500 Angströmeinheiten auf.

Die Figur 3 zeigt mit der Kurve 40 diese Verteilung der Porengröße im fertigen erfindungsgemäßen arsenresistenten Katalysator. Zum Vergleich zeigt die Kurve 42 das Verhältnis der Porengröße beim Katalysator entsprechend dem Stand der Technik. Das Interessante an diesem Vergleich ist, daß in beiden Fällen das gleiche $TiO_2$-Trägermaterial mit der gleichen Korngrößenverteilung und der gleichen spezifischen Oberfläche verwendet wurde.

Wie die Figur 1 weiter zeigt, gibt es die Möglichkeit, die sich bildende sauerstoffreiche $V_9Mo_6O_{40}$-Phase bereits im schmelzflüssigen Zustand sowohl einer Gasreduktion 50 als auch einer Elektroreduktion 52 zu unterziehen. Bei der Gasreduktion 50 wird das zu reduzierende Gas durch die Schmelze hindurchgeblasen. Als reduzierende Gase eignen sich die gleichen Gase, die auch bei der Gasreduktion im Fest- und Wirbelbett angeführt wurden. Bei der Elektroreduktion wird eine entsprechende Gleichspannung an zwei in der Schmelze eintauchende Elektroden angelegt. Beim Abkühlen friert dann in beiden Fällen bereits die reduzierte $V_6Mo_4O_{25}$-Phase neben Resten der $V_9Mo_6O_{40}$-Phase und der $MoO_3$-Phase aus. Das so erhaltene Produkt muß dann auf ein Kornspektrum kleiner als 180 μm heruntergemahlen werden bevor es, wie bereits beschrieben, mit dem gewünschten Trägermaterial vermischt bei 500 bis 600 °C kalziniert werden kann.

Die arsenresistente $V_6Mo_4O_{25}$-Phase kann sowohl auf einen metallischen Träger, wie zum Beispiel Streckmetallblech, aufgetragen, als auch als Wabe extrudiert und kalziniert werden. Es ist auch möglich, die auf einem oxidischen Trägermaterial wie $TiO_2$ aufgetragene $V_6Mo_4O_{25}$-Phase anschließend auf einen makroskopischen, keramischen Träger wie Blähton aufzutragen.

**Patentansprüche**

1. Arsenresistenter, Oxide zumindest der Metalle Vanadium und Molybdän enthaltender, Mischoxidkatalystor, insbesondere zur Minderung der Stickoxide in Rauchgasen in Gegenwart eines Reduktionsmittels, wie zum Beispiel Ammoniak oder Kohlenmonoxid, mit mindestens einer Mischoxidphase der Bruttoformel $V_6Mo_4O_{25}$ und gegebenenfalls der Phase $MoO_3$.

2. Arsenresistenter Mischoxidkatalysator nach Anspruch 1, **dadurch gekennzeichnet**, daß er auf einem Trägermaterial aufgebracht ist.

3. Arsenresistenter Mischoxidkatalysator nach Anspruch 1 und 2, **dadurch gekennzeichnet**, daß er auf einem oxidischen Trägermaterial aufgebracht ist und einen Porenradius von über 200 Angströmeinheiten bei mehr als 75 % der Poren aufweist.

4. Arsenresistenter Mischoxidkatalysator nach einem oder mehreren der Ansprüche 1 bis 3, **dadurch gekennzeichnet**, daß über 70 % der Poren einen Radius von 200 bis 10.000 Angströmeinheiten besitzen.

5. Arsenresistenter Mischoxidkatalysator nach einem oder mehreren der Ansprüche 1 bis 4, **dadurch gekennzeichnet**, daß mehr als 70 % der Poren einen Porenradius von über 500 Angströmeinheiten aufweisen.

6. Arsenresistenter Mischoxidkatalysator nach einem oder mehreren der Ansprüche 1 bis 5, **dadurch gekennzeichnet**, daß mehr als 15 % der Poren einen Porenradius von über 1000 Angströmeinheiten aufweisen.

7. Arsenresistenter Mischoxidkatalysator nach einem oder mehreren der Ansprüche 1 bis 6, **dadurch gekennzeichnet**, daß als oxidisches Trägermaterial einer oder mehrere der Stoffe Titanoxid, Koderit, Aluminiumoxid oder Siliziumoxid verwendet sind.

8. Arsenresistenter Mischoxidkatalysator nach einem oder mehreren der Ansprüche 1 bis 7, **dadurch gekennzeichnet**, daß ein metallischer Träger, wie zum Beispiel Streckmetall, Wellblech oder metallisches Flechtwerk, verwendet ist.

9. Arsenresistenter Mischoxidkatalysator nach einem oder mehreren der Ansprüche 1 bis 7, **dadurch gekennzeichnet**, daß als Träger Blähton verwendet ist.

10. Arsenresistenter Mischoxidkatalysator nach einem oder mehreren der Ansprüche 1 bis 9, **dadurch gekennzeichnet**, daß die Molybdänoxidphase teilweise reduziert ist.

11. Verfahren zur Herstellung eines arsenresistenten Mischoxidkatalysators nach einem oder mehreren der Ansprüche 1 bis 10, **dadurch gekennzeichnet**, daß Vanadiumoxid und Molybdänoxid oder einer ihrer Vorläufer miteinander vermischt, auf eine Temperatur, bei der die Mischung der Oxide gemäß dem Phasendiagramm zweckmäßigerweise vollständig geschmolzen vorliegt, erhitzt und sodann abgekühlt werden, wobei sich mindestens eine Mischoxidphase der Bruttoformel $V_9Mo_6O_{40}$ bildet und diese Mischoxidphase sodann zur Erstellung der sauerstoffärmeren Mischoxidphase der Bruttoformel $V_6Mo_4O_{25}$ einer reduzierenden Behandlung unterworfen wird.

12. Verfahren nach Anspruch 11, **dadurch gekennzeichnet**, daß die sauerstoffärmere Mischoxidphase der Bruttoformel $V_6Mo_4O_{25}$ auf einen metallischen Träger aufgebracht wird.

13. Verfahren nach Anspruch 11 und/oder 12, **da-**

**durch gekennzeichnet**, daß die sauerstoffärmere Mischoxidphase der Bruttoformel $V_6Mo_4O_{25}$ als Pulver mit einem oxidischen Trägermaterial vermischt und vorzugsweise bei 500 bis 600 °C kalziniert wird.

14. Verfahren nach einem oder mehreren der Ansprüche 11 bis 13, **dadurch gekennzeichnet**, daß die Ausgangsstoffe Vanadiumoxid und Molybdänoxid im Verhältnis 0,7 : 1 miteinander vermischt werden.

15. Verfahren nach einem oder mehreren der Ansprüche 11 bis 14, **dadurch gekennzeichnet,** daß der Schmelzvorgang bei Temperaturen über 600 °C durchgeführt und diese Temperatur über ca. eine halbe Stunde hinweg eingehalten wird.

16. Verfahren nach einem oder mehreren der Ansprüche 11 bis 15, **dadurch gekennzeichnet**, daß die $V_9Mo_6O_{40}$-Phase nach dem Abkühlen auf einen Korndurchmesser kleiner 180 $\mu$m heruntergemahlen und sodann einer reduzierenden Behandlung unterworfen wird.

17. Verfahren nach einem oder mehreren der Ansprüche 11 bis 17, **dadurch gekennzeichnet**, daß die auf einen Korndurchmesser kleiner 180 $\mu$m heruntergemahlene $V_9Mo_6O_{40}$-Phase im Festbett bei 400 bis 590 °C einer Gasreduktion unterzogen wird.

18. Verfahren nach einem oder mehreren der Ansprüche 11 bis 17, **dadurch gekennzeichnet**, daß die auf einen Korndurchmesser kleiner 180 $\mu$m heruntergemahlene $V_9Mo_6O_{40}$-Phase im Wirbelbett bei 400 bis 590 °C einer Gasreduktion unterzogen wird.

19. Verfahren nach einem oder mehreren der Ansprüche 11 bis 18, **dadurch gekennzeichnet**, daß als Reduktionsmittel Arsenoxid verwendet ist.

20. Verfahren nach einem oder mehreren der Ansprüche 11 bis 18, **dadurch gekennzeichnet**, daß als Reduktionsmittel ein oder mehrere der Gase Methan, Kohlenmonoxid, Wasserstoff, Kohlenwasserstoffe oder Aromate verwendet sind.

21. Verfahren nach einem oder mehreren der Ansprüche 11 bis 19, **dadurch gekennzeichnet**, daß bei der Verwendung von Arsenoxid als Reduktionsmittel nach der reduzierenden Behandlung überschüssiges Arsen aus dem $V_6Mo_4O_{25}$-Produkt ausgelaugt oder ausgeheizt wird.

22. Verfahren nach einem oder mehreren der Ansprüche 11 bis 16, **dadurch gekennzeichnet**, daß die auf einen Korndurchmesser kleiner 180 $\mu$m heruntergemahlene $V_9Mo_6O_{40}$-Phase einer Elektroreduktion unterworfen wird.

23. Verfahren nach einem oder mehreren der Ansprüche 11 bis 16, **dadurch gekennzeichnet**, daß die auf einen Korndurchmesser kleiner 180 $\mu$m heruntergemahlene $V_9Mo_6O_{40}$-Phase im Vakuum unterhalb des Schmelzpunktes, je nach Umsetzungsgrad, mehrere Stunden lang getempert wird.

24. Verfahren nach einem oder mehreren der Ansprüche 11 bis 21, **dadurch gekennzeichnet**, daß die reduzierende Behandlung durch Gasreduktion in der geschmolzenen $V_9Mo_6O_{40}$-Phase bei Temperaturen, bei denen die Mischung gemäß dem Phasendiagramm vollständig geschmolzen vorliegt, in Gegenwart eines Reduktionsmittels wie Arsenoxid, Kohlenmonoxid, Wasserstoff, Methan und/oder anderen Kohlenwasserstoffen bzw. Aromaten erfolgt.

25. Verfahren nach einem oder mehreren der Ansprüche 11 bis 16 und/oder 22, **dadurch gekennzeichnet**, daß die reduzierende Behandlung durch Elektroreduktion der $V_9Mo_6O_{40}$-Phase bei einer Temperatur, bei der die Mischung gemäß dem Phasendiagramm vollständig geschmolzen vorliegt, erfolgt.

26. Verfahren nach einem oder mehreren der Ansprüche 11 bis 16 und 19 bis 21 und/oder 24, **dadurch gekennzeichnet**, daß die durch die reduzierende Behandlung der schmelzflüssigen $V_9Mo_6O_{40}$-Phase erhaltene $V_6Mo_4O_{25}$-Phase nach dem Abkühlen und vor dem Zusammenmischen mit dem oxidischen Träger auf weniger als 180 $\mu$m heruntergemahlen wird.

27. Verfahren nach einem oder mehreren der Ansprüche 14 bis 26, **dadurch gekennzeichnet**, daß Titanoxid mit einer BET-Oberfläche von 40 bis 200 $m^2$/g und einem Porenradius von 20 bis zu 200 Angströmeinheiten eingesetzt wird.

FIG 1

FIG 2

FIG 3

| | Europäisches Patentamt | EUROPÄISCHER RECHERCHENBERICHT | Nummer der Anmeldung |
|---|---|---|---|
| | | | EP 91 10 7237 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y,P | EP-A-0 403 879 (SIEMENS AG)(27-12-1990)<br>* Insgesamt * | 1,2,7,8,<br>12,18-20 | B 01 D 53/36<br>B 01 J 23/28 |
| A | | 3,11,14,<br>26 | B 01 J 37/16 |
| | – – – | | |
| Y | EP-A-0 323 195 (BABCOCK-HITACHI K.K.)<br>* Seite 2, Zeilen 25-32; Seite 3, Zeilen 1-3,17-21,24-32; Beispiele 1,7 * | 1,2,7,8,<br>12,18-20 | |
| A | | 3,11,14,<br>26 | |
| | – – – | | |
| A | DE-A-3 805 564 (SIEMENS AG)<br>* Spalte 1, Zeile 1 - Spalte 2, Zeile 5; Spalte 4, Zeilen 8-11; Ansprüche 1,2,6 * | 1-3,7,8,<br>11,26 | |
| | – – – | | |
| A | EP-A-0 266 540 (SIEMENS AG)<br>* Spalte 2, Zeilen 13-37; Ansprüche 1-7,9,10 * | 1-3,7,8,<br>11,15 | |
| | – – – | | |
| A | DE-A-3 816 600 (HÜLS AG)<br>* Ansprüche 1-11 * | 1-3,7,11 | |
| | – – – | | RECHERCHIERTE SACHGEBIETE (Int. Cl.5) |
| A | EP-A-0 272 620 (BASF AG)<br>* Ansprüche 1-3 * | 1-3,7,11,<br>26 | B 01 D<br>B 01 J |
| | – – – | | |
| A | EP-A-0 317 293 (BABCOCK-HITACHI K.K.)<br>* Zeite 6, Zeile 37; Ansprüche 1-9 * | 1-7,11 | |
| | – – – – – | | |

Der vorliegende Recherchenbericht wurde für alle Patentansprüche erstellt

| Recherchenort | Abschlußdatum der Recherche | Prüfer |
|---|---|---|
| Den Haag | 05 November 91 | EIJKENBOOM A.F. |